# EUROPEAN PATENT SPECIFICATION

(11) **EP 2 623 402 B1**
(45) Date of publication and mention of the grant of the patent: **26.11.2014**
(21) Application number: 13153248.3
(22) Date of filing: 30.01.2013
(51) Int. Cl.: B62D 51/06, G05G 1/04, G05G 5/02

(54) **Operating lever unit for walk-behind working machine**
Betriebshebeleinheit für eine Arbeitsmaschine zum Schieben
Unité de levier de commande pour machine de travail électrique guidée à la main

(30) Priority: 31.01.2012 JP 2012018766
(43) Date of publication of application: 07.08.2013
(73) Proprietor: Honda Motor Co., Ltd., Tokyo 107-8556 (JP)
(72) Inventor: Yamazaki, Tatsuya, Saitama, 351-0193 (JP); Iino, Keiji, Saitama, 351-0193 (JP); Okaguchi, Kouhei, Saitama, 351-0193 (JP); Kanbara, Fumiyoshi, Saitama, 351-0193 (JP)
(74) Representative: Herzog, Markus

(56) References cited:
- WO-A1-2012/136226
- JP-A- 2011 000 005
- JP-U- S60 180 024
- US-A- 4 267 747

## Description

The present invention relates to an improvement in an operating lever unit for a walk-behind working machine.

Walk-behind working machines of the type concerned are self-propelled by power and maneuvered by a human operator walking behind the working machine while operating a handle unit. Typical examples of such walk-behind working machines include a tiller and a transporting vehicle. Some walk-behind working machines are provided with a double-action operating lever unit that requires two-stage operation to operate a load, such as disclosed in Japanese Patent Application Laid-open Publication (JP-A) No. 2011-000005, on which the preamble of claim 1 is based.

The operating lever unit disclosed in JP 2011-000005A includes an operating lever adapted to be gripped by a human operator together with a grip of a handle of the working machine, and a lock mechanism for regulating swinging operation of the operating lever. In operation of the operating lever unit, the lock mechanism is disabled to place the operating lever in an operable condition. Then, the operating lever and the grip of the handle are gripped by the human operator to activate a load such as a clutch to thereby allow the working machine to travel in a forward direction.

The lock mechanism includes a lock pin and a bracket by which the lock pin is slidably supported. The lock pin is disposed parallel to a support shaft on which the operating lever is pivotally supported. The lock pin is located in a path of pivotal movement the operating lever. The lock pin has a stepped profile along the length thereof including a large-diameter portion and a small-diameter portion in a longitudinal or axial direction of the lock pin. The lock pin is normally disposed in a locking position in which the large-diameter portion is located in the path of pivotal movement of the operating lever to thereby prevent pivotal movement of the operating lever. When the lock pin is axially slid or moved to assume an unlocking position in which the small-diameter portion of the lock pin is located in the path of pivotal movement of the operating lever but allows the operating lever to pivot or turn without interference with the lock pin.

The walk-behind working machines are not always used in a good working environment. In case of the walk-behind working machine disclosed in JP 2011-000005, the working environment is relatively poor because the working machine is used as a tiller, which in many cases involves adhesion of foreign matters such as dust and dirt generated during tilling operation.

The lock mechanism requires smooth operation over a long period of time. To this end, care must be taken to keep the lock pin and a pin-supporting hole in the bracket free from adhesion of foreign matters, thereby securing smooth sling movement of the lock pin relative to the pin-supporting hole at all times.

WO 2012/136226 A1, state of the art pursuant to Art. 54(3) EPC, discloses an operating lever unit for a walk-behind working machine including an operating lever pivotally disposed adjacent to a grip of a handlebar of the walk-behind working machine for operation by a human operator while the operating lever is gripped with a hand of the human operator together with the grip, wherein the operating lever unit further includes two swing arms pivotally disposed adjacent to the grip for operating an operated member of the walk-behind working machine; and a function selector lock lever pivotally mounted on the swing arms for operation by the human operator to releasably lock one of the swing arms in position relative to the operating lever, wherein the lock lever includes a lock pin adapted to be engaged with a part of one of the swing arms when the lock lever is operated by the human operator.

The present invention seeks to provide a double-action operating lever unit which is capable of keeping smooth operation over a long period of time.

According to the present invention, there is provided an operating lever unit for a walk-behind working machine in accordance with claim 1. The operation lever unit includes an operating lever pivotally disposed adjacent to a grip of a handlebar of the walk-behind working machine for operation by a human operator while the operating lever is gripped with a hand of the human operator together with the grip, characterized in that the operating lever unit further includes: a swing arm pivotally disposed adjacent to the grip for operating an operated member of the walk-behind working machine; and a lock lever pivotally mounted on the operating lever for operation by the human operator to releasably lock the swing arm in position relative to the operating lever, wherein the lock lever includes a lock pin adapted to be engaged with a part of the swing arm when the lock lever is operated by the human operator.

With the operating lever unit thus arranged, the lock lever is first operated or pressed by the human operator to move the lock pin into interlocking engagement with the swing arm. Subsequently, the operating lever is pulled by the human operator toward the grip to thereby turn the swing arm in a direction to operate the operated member of the walk-behind working machine. Thus, merely by pressing the locking lever, the lock pin is interlocked with the swing arm. With this arrangement, dirt and dust that may adhere to the lock pin and the swing arm do not affect interlocking engagement between the lock pin and the swing arm. The operating lever unit can therefore operate smoothly over a long period of time.

The operating lever and the swing arm are pivotably movable about a common first axis, the lock lever is pivotably movable about a second axis, the second axis being separated from the first axis and extending perpendicular to the first axis, the lock pin projects from a body of the lock lever in a direction substantially the same as a direction of pivotal movement of the lock lever occurring when the lock lever is operated by the human operator, the swing arm has a pin engagement surface engageable with the lock pin, and a path of movement of the lock pin occurring when the lock lever pivots about the second axis intersects with a path of movement of the pin engagement surface occurring when the swing arm pivots about the first axis.

With this arrangement, since the path of movement of the lock pin intersects with the path of movement of the pin engagement surface, the lock pin can move into interlocking engagement with the pin engagement surface from a crosswise direction of the swing arm when the lock lever is operated by the human operator. Such a way of interlocking engagement between the lock pin and the pin engagement surface allows the lock pin and the pin engagement surface to have a relatively large dimensional tolerance. Furthermore, dust and dirt that may adhere to the lock pin and the pin engagement surface can never give any adverse effect on the interlocking engagement between the lock pin and the pin engagement surface. This will ensure that the operating lever unit can operate smoothly and reliably over a long period of time.

Preferably, the pin engagement surface inclines in a direction to prevent the lock pin from moving in an unlocking direction which is opposite to the direction of pivotal movement of the lock lever occurring when the lock lever is operated by the human operator. The thus inclining pin engagement surface can surely keep interlocking engagement with the lock pin even when subjected to vibrations transmitted to the operating lever unit during operation of the walk-behind working machine. Thus, the operating lever unit has high operational reliability.

The swing arm may further include a protrusion disposed on an outer side of the pin engagement surface as viewed from the first axis of pivotal movement of the swing arm and bulging from the pin engagement surface for preventing the lock pin from moving in the unlocking position. The thus provided protrusion further increases the reliability of interlocking engagement between the lock pin and the pin engagement surface.

In one preferred form of the invention, the operating lever includes a hollow body having a pair of opposed sidewalls defining a hollow internal space of the hollow body, the swing arm is pivotally received in the hollow internal space of the hollow body, the rock lever is pivotally mounted to an outer surface of one of the sidewalls for operation by an index finger of the human operator, and the one sidewall has an oblong hole through which the lock pin is movable into interlocking engagement with the pin engagement surface of the swing arm. With this arrangement, since the swing arm is received in the hollow internal space of the body of the operating lever, the operating lever unit is compact in size and attractive in appearance.

Certain preferred structural embodiments of the present invention will be described below with reference to the accompanying sheets of drawings, in which:
Fig. 1 is a right side view of a walk-behind working machine provided with an operating lever unit according to a first embodiment of the present invention;
Fig. 2 is a plan view of the walk-behind working machine shown in Fig. 1;
Fig. 3 is an enlarged view of a part of the walk-behind working machine encircled at 3 in Fig. 1 and including the operating lever unit;
Fig. 4 is an exploded perspective view of the operating lever unit shown in Fig. 3;
Fig. 5 is a cross-sectional view taken along line 5-5 of Fig. 2;
Fig. 6 is a cross-sectional view taken along line 6-6 of Fig. 5;
Fig. 7 is a cross-sectional view taken along line 7-7 of Fig. 6;
Fig. 8 is a perspective view schematically illustrating the principle of action of the operating lever unit shown in Fig. 5;
Fig. 9 is a view diagrammatically showing a general configuration of the walk-behind working machine shown in Fig. 1;
Fig. 10 is a view illustrative of a condition in which a lock pin shown in Fig 6 is engaged with a swing arm;
Fig. 11 is a view illustrative of a condition in which the lock pin shown in Fig. 5 is engaged with the swing arm;
Fig. 12 is an enlarged view of the swing arm shown in Fig. 11;
Fig. 13 is a view illustrative of the manner in which the swing arm and the operating lever have been swung into a fully-operated position;
Fig. 14 is a view diagrammatically showing a general configuration of a walk-behind working machine provided with an operating lever unit according to a second embodiment of the present invention; and
Fig. 15 is a view diagrammatically showing a general configuration of a walk-behind working machine provided with an operating lever unit according to a third embodiment of the present invention.

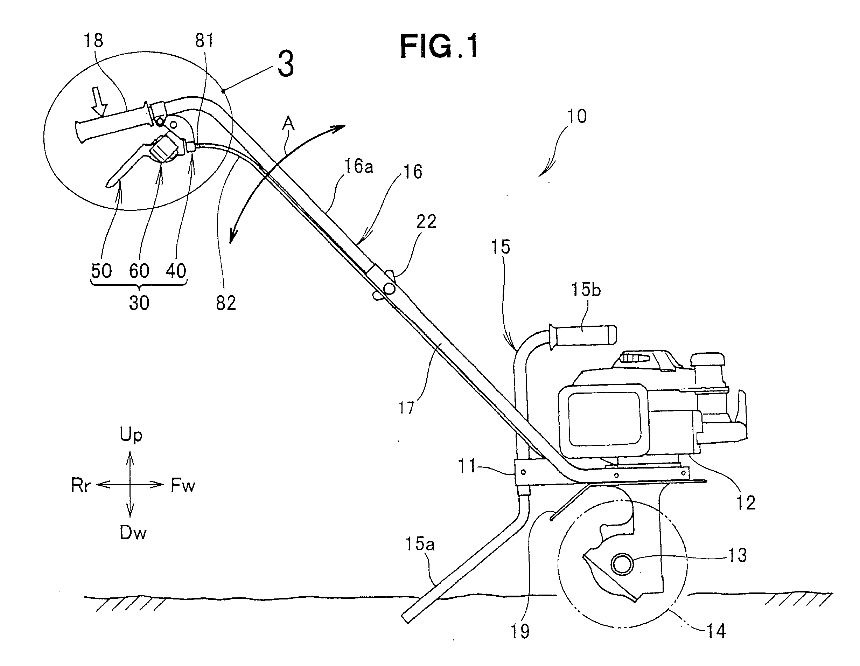

A walk-behind working machine according to a first embodiment of the present invention will be described with reference to Figs. 1 through 13, wherein reference characters "Fw", "Rr", "Up", "Dw", "R" and "L" affixed to arrowhead shown in several view are used to represent a forward direction, a rearward direction, an upward direction, a downward direction, a rightward direction, and a leftward direction, respectively, of the walk-behind working machine.

As shown in Fig. 1, the walk-behind working machine 10 according to the first embodiment is such a working machine which is self-propelled by power and maneuvered by a human operator walking behind the working machine while operating a handle unit 16. The walk-behind working machine 10 is used as a tiller. More particularly, the walk-behind working machine 10 is a small-sized walk-behind self-propelled tiller of the so-called "axle rotor" type, which includes a body 11, a vertical engine (power source) 12 mounted on the machine body 11, a tilling shaft 13 rotatably driven by power of the engine 12, a tilling tine 14 mounted on the tiling shaft 14 for rotation therewith to cultivate a ground while propelling the tiller in a forward direction.

A rod member 15 is attached to a rear part of the machine body 11. The rod member 15 includes a resistance bar section 15a extending downwardly from the machine body 11, and an L-shaped carrying handle section 15b extending upwardly from the machine body 11. The resistance bar section 15a is dug into the ground to set a desired cultivating depth and create a resistance against a traction force produced by the tilling tine 14. The carrying handle section 15b is a handle used to lift up the machine body 11 when the walk-behind working machine 10 is to be placed on a vehicle (not shown) for transportation.

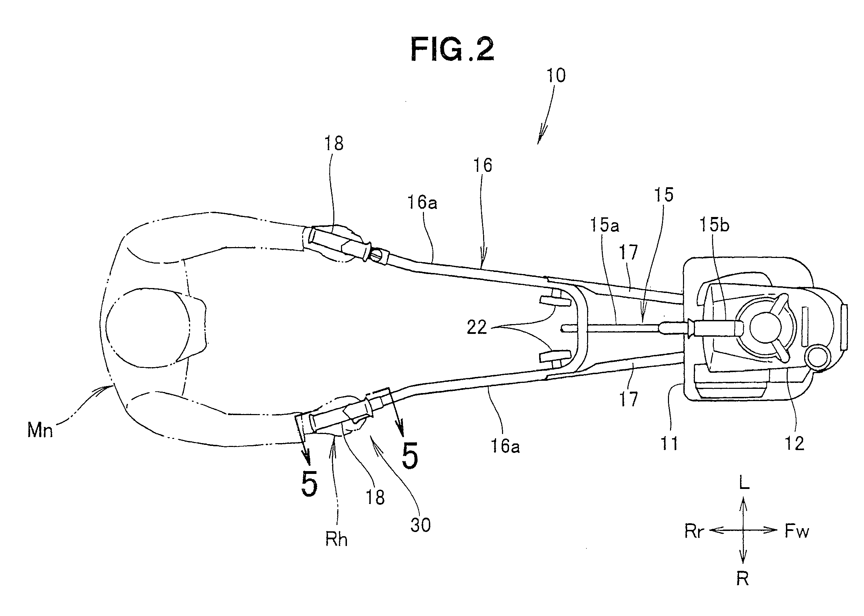

As shown in Figs. 1 and 2, the handle unit 16 of the walk-behind working machine 10 has a U shape in a plan view and has a base portion pivotally connected to a pair of left an right handle support posts 17 extending obliquely upward from the rear part of the machine body 11 in a rear ward direction of the walk-behind working machine 10. The U-shaped handle unit 16 includes a pair of left and right handlebars 16a, 16a extending continuously rearward from upper ends of the left and right handle support posts 17. The left and right handlebars 16a have left and right grips 18, 18 at free ends thereof.

The human operator M (Fig. 2) grips the left and right grips 18 to maneuver the walk-behind working machine 10. During cultivating operation, the human operator M normally continues to apply a downward force or pressure to the grips 18 by using palms of its hands, in order to suppress hopping movement of the machine body 11. One of the handlebars 16a (right handlebar in the illustrated embodiment) is provided with an operating lever unit 30.

The handle unit 16 includes a pair of handle-position adjustment means or devices 22, 22 provided on the left and right handlebars 16a, 16a, respectively, adjacent to the base portion of the U-shaped handle unit 16, so as to adjust a position of the handle unit 16. The handle-position adjustment devices 22 are each formed by a threaded knob (i.e., a knob with threaded pin) used for pivotally connecting the left and right handlebars 16a, 16a to the left and right handle support posts 17, 17. By loosening the threaded knobs (handle-position adjustment devices) 22, the handle unit 16 is allowed to pivot about the handle-position adjustment devices 22 in a vertical direction relative to the handle support posts 17, as indicated by arrow A shown in Fig. 1. When the handle unit 16 reaches a desired position well suited for operation by the human operator M, the threaded knobs (handle-position adjustment devices) 22 are tightened to set the handle 16 in the desired position. When the walk-behind working machine 10 is to be transported to another place, the handle unit 16 is folded about a common axis of the threaded knobs (handle-position adjustment devices) 22 to lie over the engine 12. By thus folding the handle unit 16, the walk-behind working machine 10 can be easily transported.

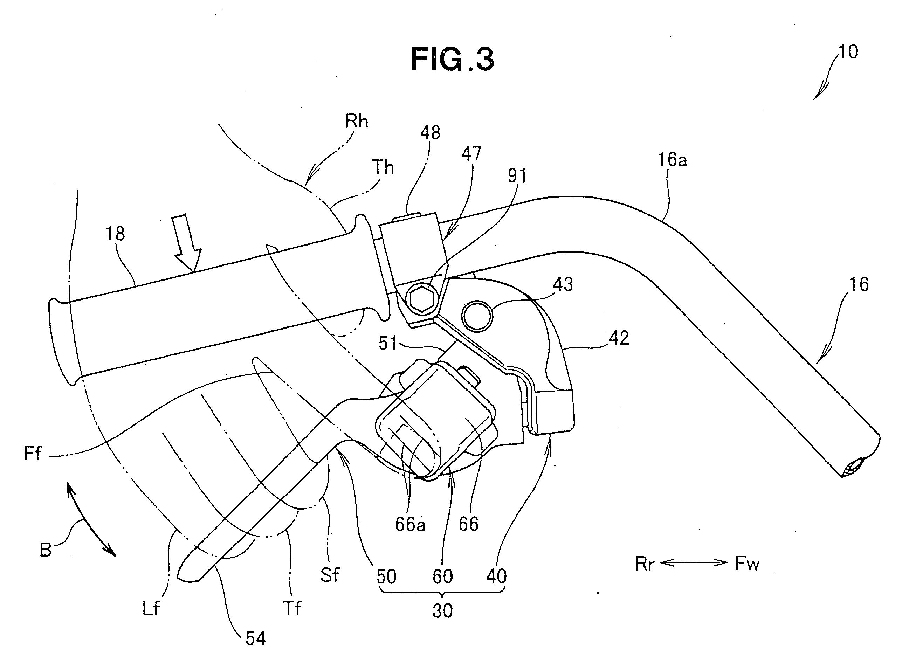

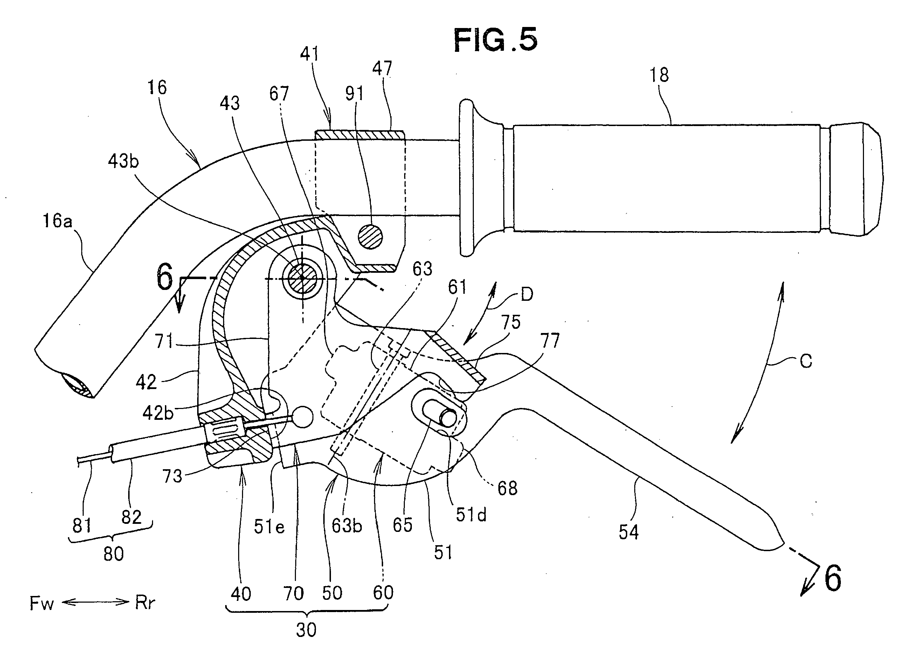

As shown in Figs. 3 and 5, the operating lever unit 30 generally comprises a bracket 40 attached to a portion of the right handlebar 16a located immediately forward of the associated grip 18, an operating lever 50 pivotally mounted to the bracket 40, a lock lever 60 pivotally mounted to the operating lever 50, and a swing arm 70 (Fig. 5) pivotally mounted to the bracket 40 together with the operating lever 50.

The operating lever 50 is pivotally movable toward and away from the grip 18 in the direction of arrow B shown in Fig. 3. The lock lever 60 is pivotally movable toward and away from the operating lever in a direction perpendicular to a plane of the drawing sheet including Fig. 3.

As shown in Fig. 3, the operating lever 50 is configured to extend rearwardly downward from the bracket 40 so as to ensure that the human operator while gripping the grip 18 with its right hand Rh can operate or pull the operating lever 50 by at least a middle finger Sf, a third finger Tf and a little finger Lt of the right hand Rh.

The lock lever 60 is mounted to a proximal end portion of the operating lever 50 so as to ensure that the human operator while gripping the grip 18 with its right hand Rh can operate or press the lock lever 60 using an index finger Ff of the right hand Rh. The lock lever 60 is attached to a lateral outer side of the operating lever 50 as viewed from a width direction of the walk-behind working machine 10. This arrangement ensures that the human operator can readily and reliably operate the lock lever 60 with its right-hand index finger Ff while keeping a grip on the grip 18 by the right hand Rh.

The lock lever 60 has a pair of ridges 66a formed at a portion provided for direct contact with the right-hand index finger Ff of the human operator. The thus provided ridges 66a allow the human operator to readily recognize through direct contact with the ridges 66a that what part of the locking lever 60 is to be pressed. The tactually recognizable ridges 66a facilitate reliable operation of the locking lever 60 by the human operator even when the lock lever 60 is mounted to a part of the operating lever 50 which is hard to find out through visual observation.

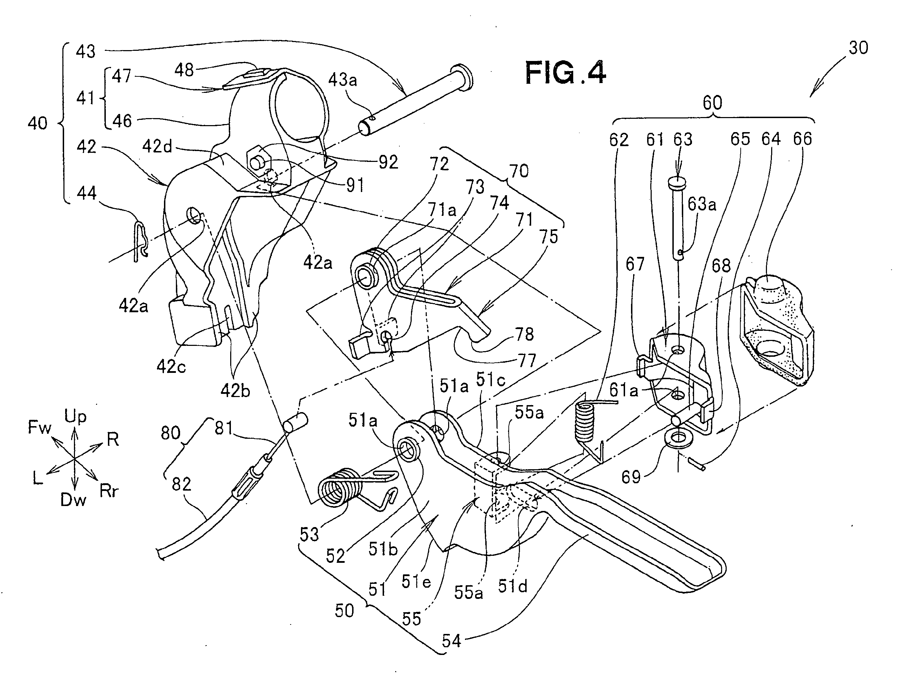

The operating lever unit 30 will be described in further detail. As shown in Figs. 4 and 5, the bracket 40 includes an attachment part 41 for being attached to the handlebar 16a, a support part 42 formed integrally with the attachment part 41 and extending downward from the attachment part 41, a rivet-like first pin member 43 inserted through a pair of axially aligned holes 42a, 42a formed in the support part 42, and a retaining pin 44 inserted in a radial through-hole 43a formed in a front end portion of the first pin member 43 for retaining the first pin member 43 in position against removal from the support part 41.

The operating lever 50 includes an operation-lever body 51 press-formed from a sheet metal into a hollow crescent form having a U-shaped cross section. The operating-lever body 51 has a pair of axially aligned holes 51a, 51a formed in a pair of opposed sidewalls 51b, 51c, respectively, of the cross-sectionally U-shaped operating-lever body 51 for insertion therethrough of the first pin member 43, and a pair of first collars 52, 52 aligned with the holes 51a, 51a an projecting from the sidewalls 51b, 51c in a lateral outward direction. The first collars 52 are formed concurrently with the holes 52 when the holes 51a are formed in the sidewalls 51b, 51c, so that the collars 52 have an inside diameter same as a diameter of the holes 51a.

The operating lever 50 also includes a first spring (torsion coil spring) 53 disposed on a laterally outer side of the first collar 52 formed on the left sidewall 51b of the operating-lever body 51 for the purpose of urging the lever body in a standby position, a lever part 54 formed integrally with the operating-lever body 51 and extending continuously from a rear end of the lever body in a rearward direction for operation by the human operator, and a lock-lever mounting bracket 55 fixed to an outer surface of the right sidewall 51c of the operating-lever body 51 for mounting the lock lever 60. The operating-lever body 51 has an oblong hole 51d formed in the right sidewall 51c at a position located rearward of the lock-lever mounting bracket 55.

The lock lever 60 includes a lock-lever body 61 attached to the lock-lever mounting bracket 55 in such a manner as to cover the lock-lever mounting bracket 55, a second spring (torsion coil spring) disposed inside the lock-lever body 61 for urging the lock-lever body 61 in a first position (inoperative position), a rivet-like second pin member 63 inserted through a pair of aligned holes 61a formed in the lock-lever body 61 and extending through a coil of the second spring 62 disposed inside the lock-lever body 61, a second retaining pin 64 inserted in a radial through-hole 63a formed in a front end portion of the second pin member 63 for retaining the second pin member 63 in position against removal from the lock-lever body 61, a lock pin 65 in the form of a round rod extending from the lock-lever body 61 toward the oblong hole 51b of the operating-lever body 51, and a cover member 66 covering the lock-lever body 61. The cover member 66 is formed of a soft flexible material such as rubber. The lock lever 60 is normally disposed in the first position in which the lock pin 65 is disengaged from the swing arm 70 and, hence, the locking lever 50 is disabled.

The swing arm 70 includes a swing-arm body 71 pivotally mounted on the first pin member 43 and received in the operating-lever body 51 of the hollow crescent form, a second collar 72 fitted in a pair of aligned holes 71a, 71a formed in the swing-arm body 71 and projecting outward from opposite sidewalls of the swing-arm body 71 in an axial direction of the first pin member 43, a pair of abutment portions 73 formed below the second collar 72 for abutting engagement with a pair of stopper portions 42b, 42b of the support part 42 of the bracket 40, a wire connecting portion 74 in the form of a keyhole formed behind the abutment portions 73 for connection with one end of an inner wire 81 of a wire cable 80, and a lock-pin retaining portion 75 formed integrally with a rear part of the swing-arm body 71 for retaining engagement with the lock pin 65 when the lock lever 60 is pressed to turn into a second position (operating position).

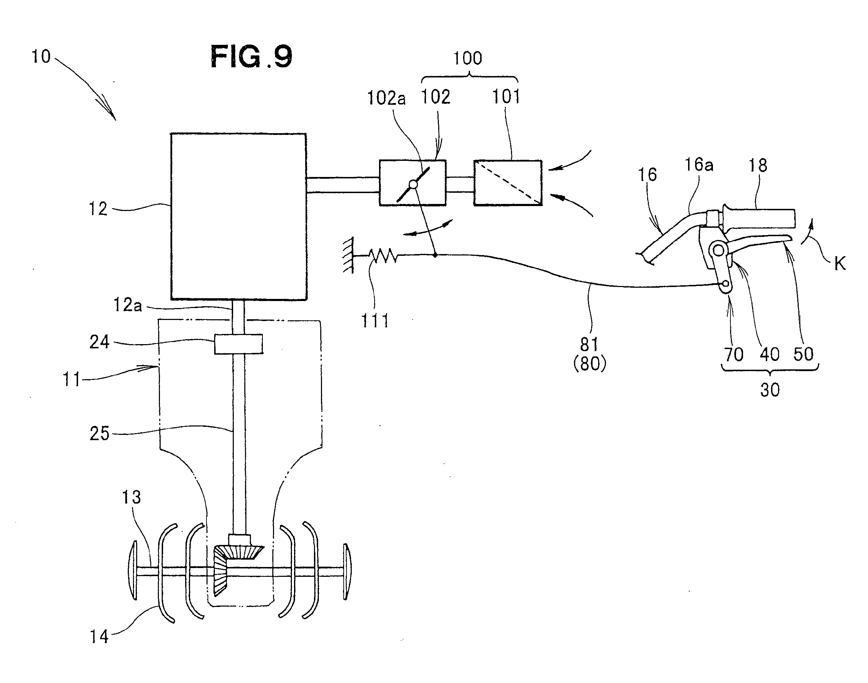

The wire cable 80 is composed of the inner wire 81 and an outer tube 82 covering the inner wire 81. As shown in Fig. 9, an opposite end of the inner wire 81 is connected to a valving element 102a of a throttle valve 102 and joined via a return spring 111 to the machine body 11. The return spring 111 acts as an urging member that urges the swing arm 70 to return to a neutral position shown in Fig. 5.

The return spring 111 is preferably set to start generating an urging force when the operating lever 50 has undergone a predetermined slight amount of pivotal movement while the lock pin 65 is kept in opposed relation to a pin engagement surface 77 of the lock-pin retaining portion 75.

As shown in Fig. 5, when the operating lever 50 is not operated to undergo pivotal movement, the lock pin 65 is spaced a distance from the pin engagement surface 77 of the lock-pin retaining portion 75. Subsequently, when the operating lever 50 is operated to undergo pivotal movement toward the grip 18 to a slight amount, the lock pin 65 comes in contact with the pin engagement surface 77. Further continuing pivotal movement of the operating lever 50 toward the grip causes the rock pin 65 to lift up the pin engagement surface 18 toward the grip 18. As a result, the swing arm 70 starts pivoting toward the grip 18. When the swing arm 70 further continues its pivotal movement toward the grip 18 by a certain amount, the return spring 111 acts upon and starts urging the swing arm 70 to toward the neutral position shown in Fig. 5. Urging timing by the return spring 111 is thus set.

As shown in Figs. 4 and 5, the attachment part 41 of the bracket 40 includes a first attachment member 46 formed integrally with the support part 42, and a thin plate-like second attachment member 47 removably attached to the first attachment member 46. The first attachment member 46 has a semicircular cross section. The thin plate-like second attachment portion 47 is made of a resilient sheet metal.

The handlebar 16a (Fig. 3) is gripped by the first and second attachment members 46, 47 such that an upper end of the second attachment member 47 is hooked on a locking prong 48 formed on an upper end of the first attachment member 46, and a lower end of the second attachment member 47 is firmly connected to a lower end of the first attachment member 46 by means of a bolt 91 and a nut 92. The support part 42 of the bracket 40 has a vertical slit 42 formed at a lower end thereof for the passage therethrough of the inner wire 81 of the wire cable 80.

The pair of holes 61a formed in the lock-lever body 61, a pair of upper and lower holes 55a, 55a formed in the lock-lever mounting bracket 55, and an axis of the coil of the second spring 62 are vertically aligned with one another.

The lock-lever body 61 has a pair of stoppers 67, 68 projecting from front and rear ends, respectively, of the lock-lever body 61 in a common direction toward the right sidewall 51c of the operating-lever body 51 so as to control a range of pivotal movement of the lock lever 60.

As shown in Fig. 5, the operating lever 50 is pivotally movable about the first pin member 43 along a path indicated by the arrow C. When the human operator pulls the lever part 54 toward the grip 18, the operating lever 50 turns in a counterclockwise direction about the first pin member 43 to approach the grip 18. When the human operator releases the lever part 54, the operating lever 50 turns in a clockwise direction about the first pin member 43 by the force of the first spring 53 (Fig. 4).

While the lever part 54 of the operating lever 50 is not gripped by the human operator, a front end portion 51e of the operating-lever body 51 is in contact with the abutment portions 73 of the swing arm 70, which is in contact with the stopper portions 42b of the bracket 40. The abutment portions 73 are provided to extend in front of the front end portion 51e of the operating-lever body 51, so that the clockwise pivotal movement of the operating lever 50 about the first pin member 43 is limited by the stopper portions 42b of the bracket 40 via the abutment portions 73.

The lock lever 60 mounted on the operating lever 50 moves concurrently with the operating lever 50 as an integral part of the operating lever 50 while the operating lever 50 undergoes pivotal movement. The lock lever 60 is pivotally movable about the second pin member 63 in a direction perpendicular to a plane of the drawing sheet including Fig. 5. When the lock lever 60 is pressed by the human operator to pivot toward the right sidewall 51c of the operating-lever body 51, the lock pin 65 passes through the oblong hole 51d formed in the right sidewall 51c and further advances to a position directly below the lock-pin retaining portion 75 of the swing arm 70.

The swing arm 70 is pivotally movable about the first pin member 43 along a path indicated by the arrow D in Fig. 5. While the operating lever 50 is in its original position, the operating lever 50 is urged by the first spring 53 (Fig. 4) to turn in the clockwise direction in Fig. 5 about the first pin member 43. The front end portion 51d of the operating-lever body 51 is, therefore, brought into abutment with the abutment portions 73 of the swing arm 71. Thus, the swing arm 70 is also urged to turn in the clockwise direction in Fig. 5. The abutment portions 73 of the swing arm 70, which is urged by the operating lever 50, are in abutment with the stopper portions 42b of the bracket 40. With this abutting engagement between the abutment portions 73 and the stopper portions 42b, the clockwise pivotal movement of the swing arm 70 about the first pin member 43 is limited. Pivotal movement of the swing arm 70 in the counterclockwise direction in Fig. 5 will be described below in greater detail.

To summarize the foregoing, the operating lever 50 and the swing arm 70 are pivotally movable about the first pin member 43 to turn in the clockwise and counterclockwise directions in Fig. 5, as indicated by the arrows C and D. The lock lever 60 mounted on the operating lever 50 is movable together with the operating lever 50 as an integral part of the operating lever 50 while the operating lever 50 undergoes pivotal movement. Furthermore, the lock lever 60 is pivotally movable about the second pin member 63 in a direction perpendicular to a plane of the drawing sheet including Fig. 5. The bracket 40 is fixedly mounted on the handlebar 16a and cannot move in any direction.

As shown in Fig, 6, the operating lever 50 and the swing arm 70 are pivotally supported by the first pin member 43. More specifically, an axis of pivotal movement of the operating lever 50 and an axis of pivotal movement of the swing arm 70 are coincident with an axis 43b of the first pin member 43. The axis 43b of the first pin member 43 forms a common axis of pivotal movement of the operating lever 50 and the swing arm 70.

By thus supporting the operating lever 50 and the swing arm 70 by a single pin member (first pin member) 43, the number of parts can be reduced. Furthermore, the swing arm 70 is received inside the operating lever 50, and this arrangement makes the operating lever unit 30 compact in size and attractive in appearance.

The first spring 53 is loosely mounted on the first pin member 43 and has one end anchored on the operating-lever body 51 and an opposite end held in contact with an engagement portion 42d (Fig. 4) of the bracket 40.

The second pin member 63 has an axis 63b, which forms an axis of pivotal movement of the lock lever 60. The axis 63b of the second pin member 63 is separated from the axis 43b of the first pin member 43 and extends perpendicular to the axis 43b of the first pin member 43.

The rock pin 65 has a rivet-like form and extends from the lock-lever body 61 in a direction substantially parallel to a path of pivotal movement of the lock lever 60. While the lock lever 60 is disposed in its original position where the lock pin 60 is not pressed by the human operator, the lock pin 65 is inclined rearward at a predetermined angle θ with respect to a width direction of the walk-behind working machine.

The second spring 62 is loosely mounted on the second pin member 63 and has one end engaged with the right sidewall 51c of the operating-lever body 51 and an opposite end engaged with the lock-lever body 61. The thus arranged second spring 62 urges the lock lever 60 to turn in a direction to retract the lock pin 65 away from the swing arm 70.

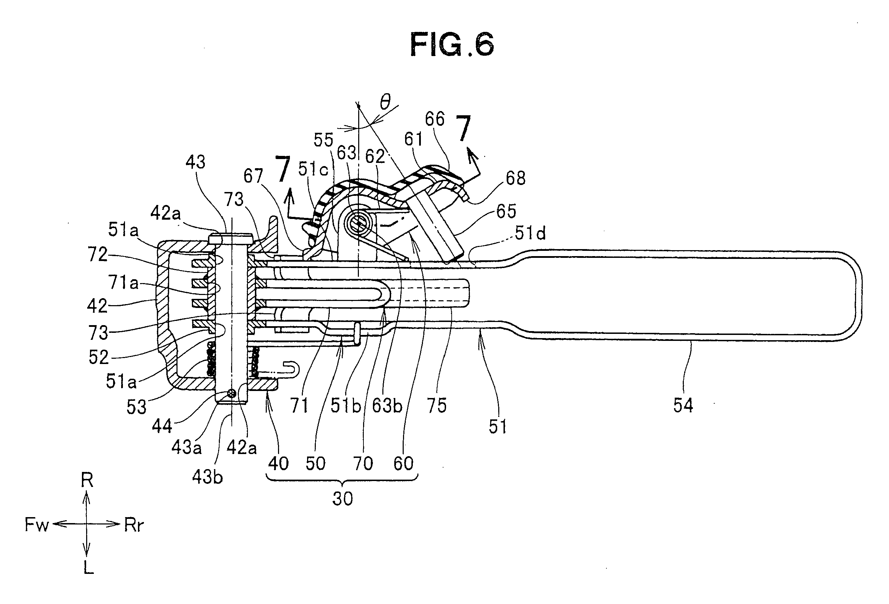

While the lock lever 60 is disposed in its original position shown in Fig. 6 where the lock lever 60 is not operated to undergo pivotal movement, the front stopper 67 is in contact with the right sidewall 51c of the operating-lever body 51 to thereby prevent further retracting movement of the lock pin 65 with respect to the swing arm 70.

The second collar 72 of the swing arm 70 has a length slightly smaller than a distance between the left and right sidewalls 51b, 51c of the operating-lever body 51, so as to ensure that the swing arm 70 is pivotally movable about the first pin member 43 while being received in a hollow internal space of the operating-lever body 51.

Additionally, in terms of a width direction thereof, the lock arm 70 is positioned by the second collar 72 relative to the operating-lever body 51. By thus positioning the lock arm 70 relative to the operating-lever body 51, the operating lever unit 30 can be assembled easily and efficiently.

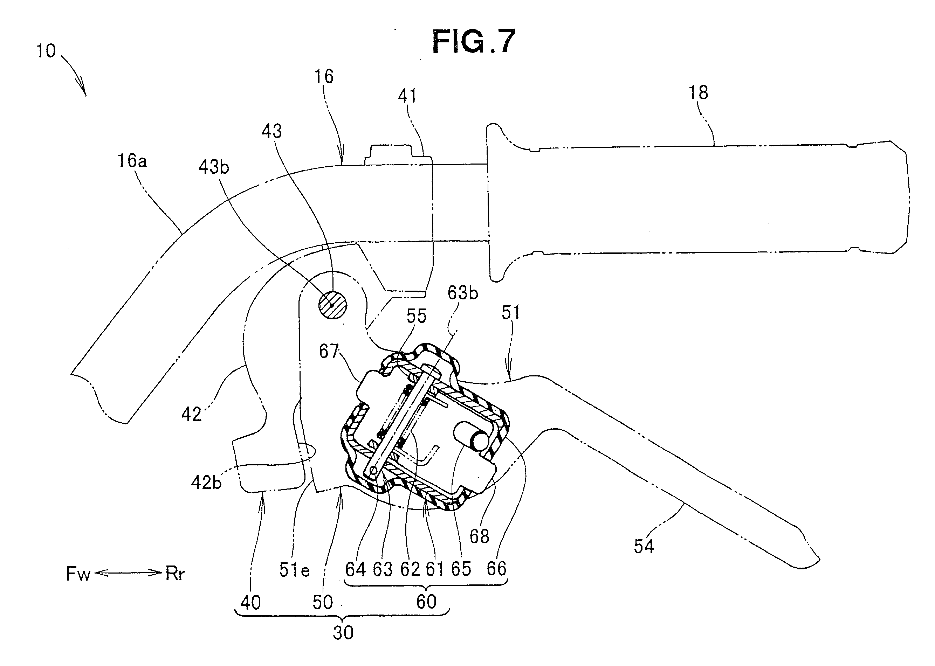

As shown in Fig. 7, the lock-lever body 61 of the lock lever 60 is pivotally mounted on the second pin member 63 mounted to the lock-lever mounting bracket 55. The second pin member 63 extends through the coil of the second spring 62. Opposite end portions of the second pin member 63 are covered by the cover member 66 of the lock lever 60.

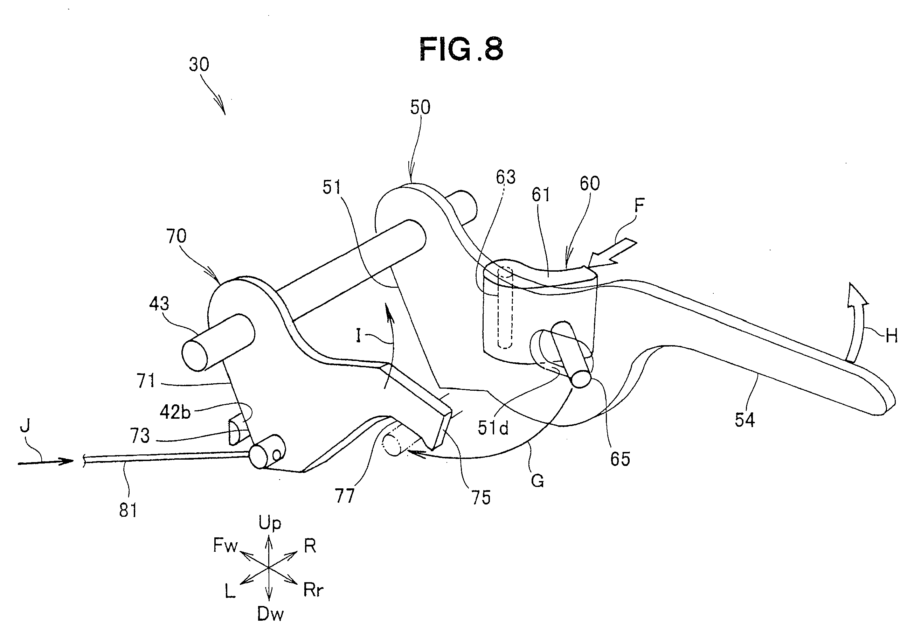

Operation of the walk-behind working machine of the foregoing construction will be described with reference to Figs. 8 and 9.

As shown in Fig. 8, the human operator presses the lock lever 60 toward the operating lever 50 as indicated by the profiled arrow F. This causes the lock pin 65 to start moving toward the swing arm 70 from a crosswise direction as indicated by the arrow G. After having undergone the pivotal movement, the lock pin 65 is disposed in a position located directly below the lock-pin retaining portion 75 of the swing arm 70.

Then, the human operator pulls the lever part 54 of the operating lever 50 toward the grip 18 (Fig. 7) to thereby turn the operating lever 50 counterclockwise about the first pin member 43 as indicated by the profiled arrow H. The counterclockwise pivotal movement of the operating lever 50 causes the lock pin 65 to first come into contact with the lock-pin retaining portion 75 of the swing arm 70 and subsequently lift up the lock-pin retaining portion 75, causing the swing arm 70 to turn counterclockwise about the first pin member 43 as indicated by the arrow I. With this counterclockwise pivotal movement of the swing arm 70, the inner wire 81 is pulled in a direction indicated by the arrow J.

As shown in Fig. 9, the engine 12 has an intake system 100 including an air filter 101 through which air to be supplied to the engine is introduced, and a throttle valve 102 connected to the air filter 101 for regulating the amount of air supplied to the engine 12. The throttle valve 102 corresponds to an operated member to be operated by the swing arm 70.

The inner wire 81 is connected to the valving member 102a of the throttle valve 102 and also to the return spring 111, which acts to pull the inner wire 81 toward the machine body 11.

The operating lever 50 and the swing arm 70 pivotally movable concurrently in the same direction to pull the inner wire 81 whereupon the valving member 102 turns in a valve opening direction to thereby to thereby increase the amount of air supplied to the engine 12. Power output of the engine 12 can thus be regulated.

As the operating lever 50 approaches the grip 18, as indicated by the arrow K shown in Fig. 9, an opening of the throttle valve 102 gradually increases to thereby increase the power output of the engine 12. The operating lever 50 thus used for regulating the power output of the engine 12 serves as a throttle lever for regulating the opening of the throttle valve 102.

When the human operator releases the operating lever 50, the inner wire 81 is pulled toward the machine body 11 by the force of the return spring 111 until the valving member 102a is closed to assume a position to provide a minimum valve opening. When the opening of the throttle valve 102 has a minimum value, the engine 12 is idling at a minimum rotational speed.

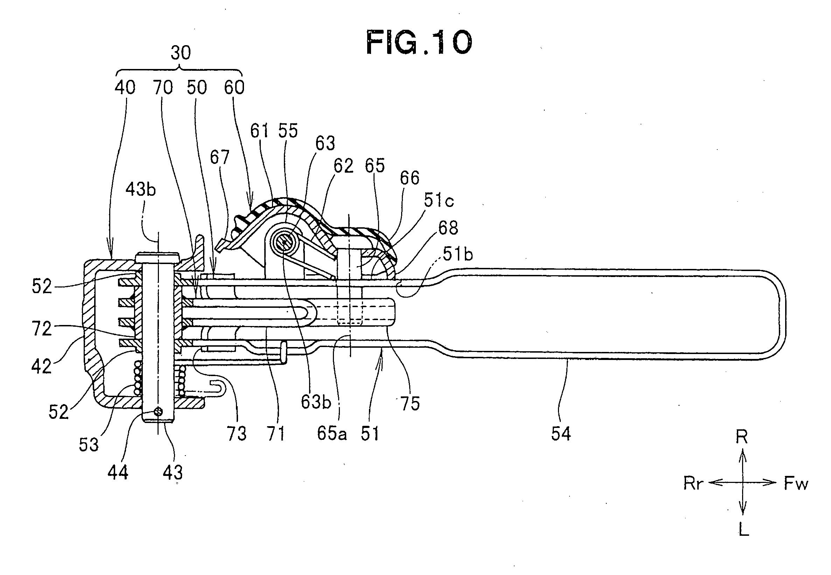

The engine 12 has an output shaft 12a connected via a centrifugal clutch 24 to a power-transmitting shaft 25. The power-transmitting shaft 25 is connected to the tilling shaft 13. While the engine 12 is in the idling state, a rotational speed of the output shaft 12a is smaller than a predetermined constant reference value (clutch-on reference value) so that the centrifugal clutch 24 remains in a disengaged condition (clutch-off state). Thus, the power output of the engine 12 is not transmitted to the tilling tine 14. The foregoing operation will be described below in further detail with reference to Figs. 10 through 13.

As shown in Fig. 10, the lock lever 60 is set to undergo pivotal movement in the clockwise direction about the second pin member 63 until it assumes a position in which the axis 65a of the lock pin 65 is parallel to the axis 43b of the first pin member 43. In this instance, the rear stopper 68 of the lock-lever body 61 is in contact with the right sidewall 51c of the operating-lever body 51 to thereby prevent further clockwise pivotal movement of the lock lever 60. By thus restricting an end of the clockwise pivotal movement of the lock lever 60 to the position in which the axis 65a of the lock pin 65 is parallel to the axis 43b of the first pin member 43, it is possible to arrange the lock pin 65 in such a manner as to extend perpendicular to the lock-pin retaining portion 75 of the swing arm 70.

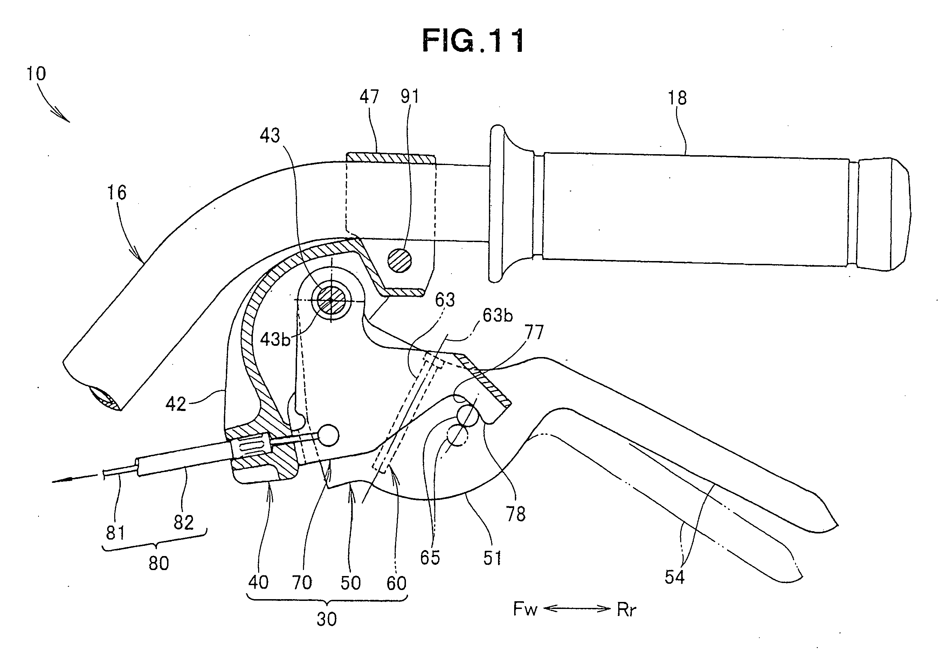

As shown in Fig. 11, when the lock lever 60 is disposed in the position where the lock pin 65 is disposed below, and in opposed relation to, the lock-pin retaining portion 75 of the swing arm 70, the lock pin 65 is spaced a distance from the pin engagement surface 77 of the lock-pin retaining portion 75, as indicated by phantom lines. Thus, the lock pin 65 comes into contact with the pin engagement surface 77 of the lock-pin retaining part only when the lever part 54 of the operating lever 50 is pulled to undergo a slight pivotal movement in the counterclockwise direction toward the grip 18.

A path of movement of the lock pin 65 occurring when lock lever 60 pivots about the axis 63b intersects with a path of movement of the pin engagement surface 77 occurring when the swing arm 70 pivots about the axis 43b, so that the lock pin 65 can reliably move into interlocking engagement with the pin engagement surface 77 of the swing arm 70 from a crosswise direction of the swing arm 70.

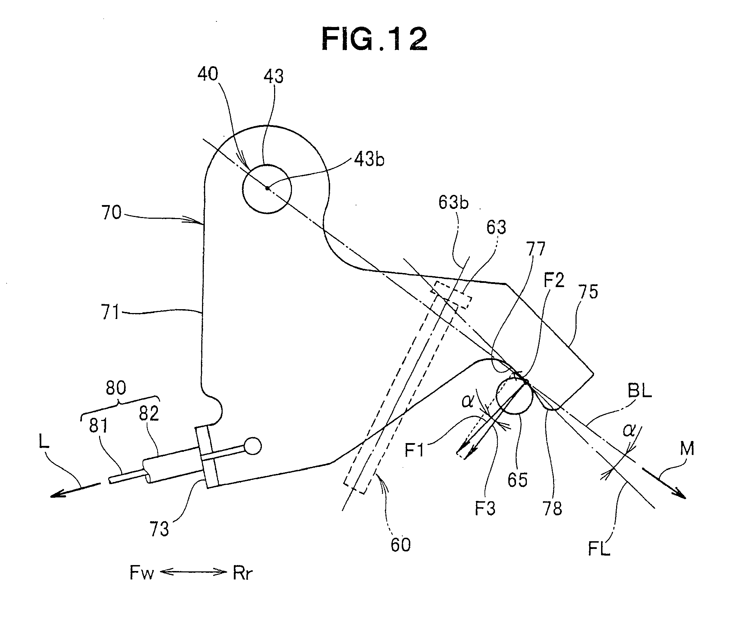

As shown in Fig. 12, the inner wire 81 is subjected to a tensile force acting in the direction of arrow L. The tensile force is transmitted via the swing arm 70 to the lock pin 65. Given that the tensile force transmitted to the lock pin 65 is represented by F1, the transmitted tensile force F1 acts in a direction perpendicular to a straight line FL extended from the pin engagement surface 77. The force F1 can be separated into a first component force (horizontal component force) F2 acting along a straight line BL connecting the axis 43b of the first pin member 43 and a contact point between the lock pin 65 and the pin engagement surface 77, and a second component force (vertical component force) F3 acting in a direction perpendicular to the straight line BL.

The horizontal component force F2 acts in a direction to move the lock pin 65 along the straight line BL. More specifically, the horizontal component force F2 acts in a direction to move the lock pin 65 toward the axis 43b of the first pin member 43, which is identical to the axis of pivotal movement of the swing arm 70. By the horizontal component force F2 of the tensile force F1, the lock pin 65 is held in contact with the pin engagement surface 77.

The pin engagement surface 77 inclines at an angle α relative to the straight line BL in a direction to prevent the lock pin 65 from moving in an unlocking direction indicated by the arrow M shown in Fig. 12. The angle α is determined such that the horizontal component force F2 has an optimum value.

Since the pin engagement surface 77 inclines in a direction to prevent the lock pin 65 from moving in the unlocking direction, interlocking engagement between the lock pin 65 and the pin engagement surface 77 can surely be maintained even when the operating lever unit 30 is subjected to vibrations transmitted from the walk-behind working machine 10. This will increase the reliability in operation of the operating lever unit 30.

After the lock pin 65 comes in contact with the pin engagement surface 77, the human operator is allowed to grip only the operating lever 50 (Fig. 11). This is because the lock pin 65 is prevented from disengaging from the pin engagement surface 77 and, hence, the human operator is allowed to release a pressure on the lock lever 60.

The swing arm 70 further has a protrusion 78 provided on an outer side of the pin engagement surface 77 as viewed from the axis 43b of pivotal movement of the swing arm 70. The protrusion 78 bulges from the pin engagement surface 77. By thus providing the protrusion 78, the lock pin 65 and the pin engagement surface 77 are held in close contact with each other during work.

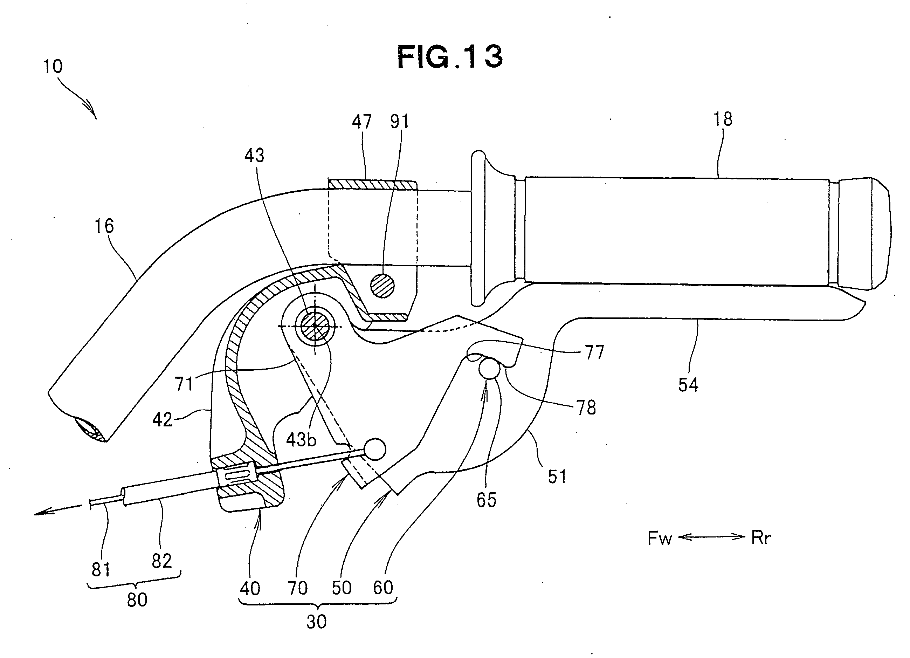

As shown in Fig. 13, the operating lever 50 is pivotally movable in the counterclockwise direction about the axis 43b of the first pin member 43 until it assumes a position in which the lever part 54 of the operating lever 50 is in contact with the grip 18. In this instance, further pivotal movement of the operating lever 50 in the counterclockwise direction is prevented by the grip 18 and, hence, the grip 18 serves as a stopper.

Referring back to Fig. 9, the operating lever 50 is pulled toward the grip 18 during operation. As the operating lever 50 approaches the grip 18, the throttle valve 102 gradually increases its valve opening via the inner wire 81. During that time, the rotational speed of the engine 12 increases from a minimum value (idling speed) to a certain higher level. When the rotational speed of the engine 12 reaches a preset reference value, the centrifugal clutch 24 is operated in an engaged state (clutch-on state). As a result, power output of the engine 12 is transmitted from the output shaft 12a through the centrifugal clutch 24 and the power-transmitting shaft 25 to the tilling shaft 13, thereby rotating the tilling tine 14.

As thus far described, the human operator first operates or presses the lock lever 60 of the operation lever unit 30 to move the lock pin 65 into interlocking engagement with the swing arm 70. Subsequently, the human operator pulls the operating lever 50 toward the grip 18 to thereby turn the swing arm 70 in a direction to activate the throttle valve (operated member) 102. Thus, merely by pressing the lock lever 60, the lock pin 60 is interlocked with the swing arm 70. With this arrangement, dirt and dust that may adhere to the lock pin 65 and the swing arm 70 do not affect interlocking engagement between the lock pin 65 and the swing arm 70. The operating lever unit 30 of the present invention can therefore maintain smooth operation over a long period of time,

Furthermore, the path of movement of the lock pin 65 (indicated by the arrow 7 shown in Fig. 8) occurring when the lock lever 60 pivots about the axis 63b intersects with the path of movement of the pin engagement surface 77 (indicated by the arrow I shown in Fig. 8) occurring when the swing arm 70 pivots about the axis 43b. With this arrangement, merely by pressing the lock lever 60, the lock lever 65 can move into interlocking engagement with the pin engagement surface 77 from a crosswise direction of the swing arm 70. Such a way of interlocking engagement allows the lock pin 65 and the engagement surface 77 to have a relatively large dimensional tolerance. Additionally, dust and dirt that may adhere to the lock pin 65 and the pin engagement surface 77 can never give any adverse effect on the interlocking engagement between the lock pin 65 and the pin engagement surface 77. This will ensure that the operating lever unit 30 can operate smoothly and reliable over a long period of time.

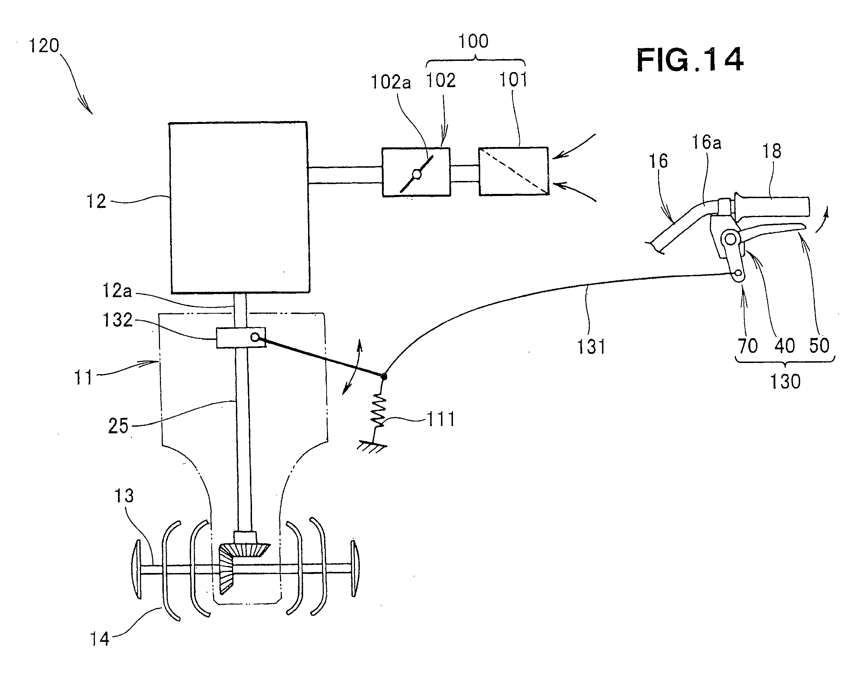

A second embodiment of the present invention will next be described with reference to Fig. 14. Fig. 14 shows a general configuration of a walk-behind working machine 120 equipped with an operating lever unit 130 according to the second embodiment of the present invention. In Fig. 14, these parts which are corresponding or identical to those shown in Fig. 9 are designated by the same reference characters. The walk-behind working machine 120 is **characterized in that** an operated member to be operated by a swing arm 70 is a clutch 132. Other structural parts are the same as those of the first embodiment described previously with reference to Figs. 1 through 13, and a further description thereof can be omitted.

As shown in Fig. 14, the operating lever unit 130 is substantially the same in structure as the operating lever 30 shown in Figs. 1-13. The swing arm 70 of the operating lever unit 130 is connected to the clutch 132 via a wire cable 131. The clutch 132 is interposed between an output shaft 12 of an engine 12 and a power-transmitting shaft 25 and constitutes an operated member which is to be operated by the swing arm 70. An operating lever 50 of the operating lever unit 131 serves as a clutch lever which can switch the clutch 132 between an engaged state (clutch-on state) and a disengaged state (clutch-off state). The operating lever unit 130, which is used for switching the on-off state of the clutch 132, can also achieve the same advantageous effects as described above with respect to the first embodiment shown in Figs. 1-13.

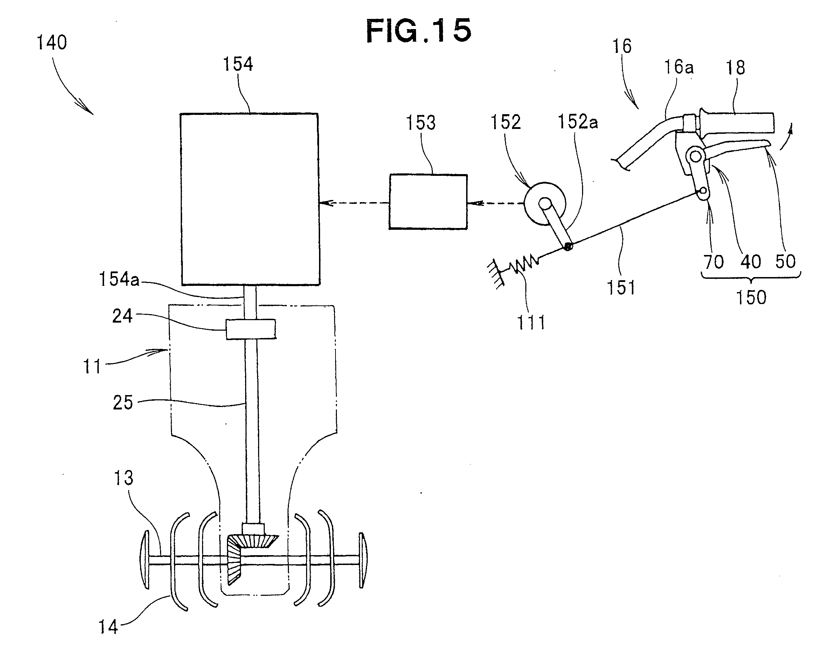

A third embodiment of the present invention will next be described with reference to Fig. 15. Fig. 15 shows a general configuration of a walk-behind working machine 140 equipped with an operating lever unit 150 according to the third embodiment of the present invention. In Fig. 15, these parts which are corresponding or identical to those shown in Fig. 9 are designated by the same reference characters. The walk-behind working machine 140 is **characterized in that** an operated member to be operated by a swing arm 70 is a variable resistor 152. Other structural parts are the same as those of the first embodiment described previously with reference to Figs. 1 through 13, and a further description thereof can be omitted.

As shown in Fig. 15, the operating lever unit 150 is substantially the same in structure as the operating lever 30 shown in Figs. 1-13. The swing arm 70 of the operating lever unit 150 is connected to the variable resistor 152 via a wire cable 151. The variable resistor 152 is connected to a control unit 153 that is provided for controlling operation of a motor 154. The motor 154 has an output shaft 154a connected via a clutch 24 to a power-transmitting shaft 25.

With this arrangement, when an operating lever 50 of the operating lever unit 50 is operated by a human operator to undergo pivotal movement, a rotary lever or knob 152 provided on the variable resistor 152 angularly moves or turns to vary a resistance value of the variable resistor 152. The resistance value is converted into a power output of the motor 154, and based on the converted value, the control unit 153 controls the motor 154. The variable resistor 152 constitutes an operated member which is to be operated by the swing arm 70. The operating lever 50 of the operating lever unit 150 serves as a power output regulating lever which can regulate power output of the motor 154. The operating lever unit 150, which is used for regulating power output of the motor 154, can also achieve the same advantageous effects as described above with respect to the first embodiment shown in Figs. 1-13.

Although in the illustrated embodiments, walk-behind working machines provided with the operating lever unit according to the invention take the form of a tiller, the operating lever unit of the invention can also be applied to any type of walk-behind working machine including a transporting vehicle, a lawnmower, a snow-removing machine, or an in-plant working machine.

With the arrangements so far described, the present invention can be used advantageously as an operating lever unit for a walk-behind self-propelled tiller, which in most cases is used while a human operator continuously applies a downward force or pressure on the grips of the tiller.

An operating lever unit (30) for a walk-behind working machine includes an operating lever (50) pivotally disposed adjacent to a grip (18) of a handlebar (16a) for being gripped with a human operator together with the grip, a swing arm (70) pivotally disposed adjacent to the grip for operating an operated member of the walk-behind working machine, and a lock lever (60) pivotally mounted on the operating lever for operation by the human operator to releasably lock the swing arm in position relative to the operating lever. The lock lever includes a lock pin (65) adapted to be engaged with a part of the swing arm when the lock lever is operated by the human operator.

## Claims

1. An operating lever unit for a walk-behind working machine (10; 120; 140) including an operating lever (50) pivotally disposed adjacent to a grip (18) of a handlebar (16a) of the walk-behind working machine for operation by a human operator (Mn) while the operating lever is gripped with a hand of the human operator together with the grip, **characterized in that** the operating lever unit further includes:
a swing arm (70) pivotally disposed adjacent to the grip (18) for operating an operated member (102; 132; 152) of the walk-behind working machine; and
a lock lever (60) pivotally mounted on the operating lever (50) for operation by the human operator to releasably lock the swing arm (70) in position relative to the operating lever (50),
wherein the lock lever (60) includes a lock pin (65) adapted to be engaged with a part of the swing arm (70) when the lock lever (60) is operated by the human operator, wherein the operating lever (50) and the swing arm (70) are pivotably movable about a common first axis (43b), the lock lever (60) is pivotably movable about a second axis (63b), the second axis (63b) being separated from the first axis (43b) and extending perpendicular to the first axis (43b), the lock pin (65) projects from a body (61) of the lock lever (60) in a direction substantially the same as a direction of pivotal movement of the lock lever (60) occurring when the lock lever (60) is operated by the human operator, the swing arm (70) has a pin engagement surface (77) engageable with the lock pin (65), and a path of movement of the lock pin (65) occurring when the lock lever (60) pivots about the second axis (63b) intersects with a path of movement of the pin engagement surface (77) occurring when the swing arm (70) pivots about the first axis (43b).

2. The operating lever unit of claim 1, wherein the pin engagement surface (77) inclines in a direction to prevent the lock pin (65) from moving in an unlocking direction which is opposite to the direction of pivotal movement of the lock lever (60) occurring when the lock lever (60) is operated by the human operator.

3. The operating lever unit of claim 2, wherein the swing arm (70) includes a protrusion (78) disposed on an outer side of the pin engagement surface (77) as viewed from the first axis (43b) of pivotal movement of the swing arm (70) and bulging from the pin engagement surface (77) for preventing the lock pin (65) from moving in the unlocking position.

4. The operating lever unit of any one of claims 1 to 3, wherein the operating lever (50) includes a hollow body (51) having a pair of opposed sidewalls (51b, 51c) defining a hollow internal space of the hollow body (51), the swing arm (70) is pivotally received in the hollow internal space of the hollow body (51), the rock lever (60) is pivotally mounted to an outer surface of one of the sidewalls (51c) for operation by an index finger of the human operator, and the one sidewall (51) has an oblong hole (51d) through which the lock pin (65) is movable into interlocking engagement with the pin engagement surface (77) of the swing arm (70).

## Patentansprüche

1. Bedienungshebeleinheit für eine Arbeitsmaschine zum Hinterhergehen (10; 120; 140), die einen Bedienungshebel (50) enthält, der benachbart einem Griff (18) einer Lenkstange (16a) der Arbeitsmaschine zum Hinterhergehen schwenkbar angeordnet ist, zur Betätigung durch eine Bedienungsperson (Mn), während der Bedienungshebel mit einer Hand der Bedienungsperson zusammen mit dem Griff ergriffen wird, **dadurch gekennzeichnet, dass** die Bedienungshebeleinheit ferner enthält:
einen Schwenkarm (70), der benachbart dem Griff (18) schwenkbar angeordnet ist, um ein betätigtes Element (102; 132; 152) der Arbeitsmaschine zum Hinterhergehen zu betätigen; und
einen Arretierhebel (60), der an dem Bedienungshebel (50) schwenkbar angebracht ist, zur Betätigung durch die Bedienungsperson, um die Position des Schwenkarms (70) relativ zu dem Bedienungshebel (50) lösbar zu arretieren,
wobei der Arretierhebel (60) einen Arretierstift (65) enthält, der zum Eingriff mit einem Teil des Schwenkarms (70) ausgelegt ist, wenn der Arretierhebel (60) von der Bedienungsperson betätigt wird, wobei der Bedienungshebel (50) und der Schwenkarm (70) um eine gemeinsame erste Achse (43b) herum schwenkbeweglich sind, wobei der Arretierhebel (60) um eine zweite Achse (63b) schwenkbeweglich ist, wobei die zweite Achse (63b) von der ersten Achse (43b) getrennt ist und sich senkrecht zur ersten Achse (43b) erstreckt, wobei der Arretierstift (65) von einem Körper (61) des Arretierhebels (60) in einer Richtung vorsteht, die im Wesentlichen gleich der Richtung der Schwenkbewegung des Arretierhebels (60) ist, die stattfindet, wenn der Arretierhebel (60) von der Bedienungsperson betätigt wird, wobei der Schwenkarm (70) eine Stifteingriffsfläche (77) aufweist, die mit dem Arretierstift (65) in Eingriff bringbar ist, und ein Bewegungsweg des Arretierstifts (65), der stattfindet, wenn der Arretierhebel (60) um die zweite Achse (63b) herum schwenkt, einen Bewegungsweg der Stifteingriffsfläche (77), der stattfindet, wenn der Schwenkarm (70) um die erste Achse (43b) herum schwenkt, schneidet.

2. Die Bedienungshebeleinheit von Anspruch 1, wobei die Stifteingriffsfläche (77) in einer Richtung geneigt ist, um eine Bewegung des Arretierstifts (65) in eine Arretier-Löserichtung zu verhindern, die der Schwenkbewegungsrichtung des Arretierhebels (60) entgegengesetzt ist, welche stattfindet, wenn der Arretierhebel (60) von der Bedienungsperson betätigt wird.

3. Die Bedienungshebeleinheit von Anspruch 2, wobei der Schwenkarm (70) einen Vorsprung (78) enthält, der, bei Betrachtung von der ersten Achse (43b) der Schwenkbewegung des Schwenkarms (70), an einer Außenseite der Stifteingriffsfläche (77) angeordnet ist und von der Stifteingriffsfläche (77) weg gewölbt ist, um eine Bewegung des Arretierstifts (65) in der Arretier-Lösestellung zu verhindern.

4. Die Bedienungshebeleinheit von einem der Ansprüche 1 bis 3, wobei der Bedienungshebel (50) einen Hohlkörper (51) mit einem Paar von entgegengesetzten Seitenwänden (51 b, 51 c) enthält, die einen hohlen Innenraum des Hohlkörpers (51) definieren, wobei der Schwenkarm (70) in den hohlen Innenraum des Hohlkörpers (51) schwenkbar aufgenommen ist, wobei der Arretierhebel (60) an einer Außenoberfläche einer der Seitenwände (51 c) schwenkbar angebracht ist, zur Betätigung mit einem Zeigefinger der Bedienungsperson, und die eine Seitenwand (51) ein Langloch (51d) aufweist, durch das der Arretierstift (65) in Arretiereingriff mit der Stifteingriffsfläche (77) des Schwenkarms (70) bewegbar ist.

## Revendications

1. Unité de levier de commande pour une machine de travail électrique guidée à la main (10; 120; 140), comprenant un levier de commande (50) qui est disposé de façon pivotante à proximité d'une poignée (18) ou d'un guidon (16a) de la machine de travail électrique guidée à la main pour un actionnement par un opérateur humain (Mn) lorsque le levier de commande est saisi par une main de l'opérateur humain de concert avec la poignée, **caractérisée en ce que** l'unité de levier de commande comprend en outre:
un bras oscillant (70) qui est disposé de façon pivotante à proximité de la poignée (18) pour actionner un élément commandé (102; 132; 152) de la machine de travail électrique guidée à la main; et
un levier de verrouillage (60) qui est monté de façon pivotante sur le levier de commande (50) pour un actionnement par l'opérateur humain afin de verrouiller de façon libérable le bras oscillant (70) en position par rapport au levier de commande (50),
dans laquelle le levier de verrouillage (60) comprend une broche de verrouillage (65) qui est adaptée pour être engagée avec une partie du bras oscillant (70) lorsque le levier de verrouillage (60) est actionné par l'opérateur humain, dans laquelle le levier de commande (50) et le bras oscillant (70) sont mobiles de façon pivotante autour d'un premier axe commun (43b), le levier de verrouillage (60) est mobile de façon pivotante autour d'un deuxième axe (63b), le deuxième axe (63b) étant séparé du premier axe (43b) et s'étendant perpendiculairement au premier axe (43b), la broche de verrouillage (65) fait saillie à partir d'un corps (61) du levier de verrouillage (60) dans une direction qui est sensiblement la même qu'une direction de déplacement pivotant du levier de verrouillage (60) qui se produit lorsque le levier de verrouillage (60) est actionné par l'opérateur humain, le bras oscillant (70) présente une surface d'engagement de broche (77) qui peut être engagée avec la broche de verrouillage (65), et un chemin de déplacement de la broche de verrouillage (65) qui se produit lorsque le levier de verrouillage (60) pivote autour du deuxième axe (63b) coupe un chemin de déplacement de la surface d'engagement de broche (77) qui se produit lorsque le bras oscillant (70) pivote autour du premier axe (43b).

2. Unité de levier de commande selon la revendication 1, dans laquelle la surface d'engagement de broche (77) s'incline dans une direction pour empêcher la broche de verrouillage (65) de se déplacer dans une direction de déverrouillage qui est opposée à la direction de déplacement pivotant du levier de verrouillage (60) qui se produit lorsque le levier de verrouillage (60) est actionné par l'opérateur humain.

3. Unité de levier de commande selon la revendication 2, dans laquelle le bras oscillant (70) comporte une saillie (78) qui est disposée sur un côté extérieur de la surface d'engagement de broche (77) lorsque l'on regarde à partir du premier axe (43b) de déplacement pivotant du bras oscillant (70) et qui fait saillie à partir de la surface d'engagement de broche (77) afin d'empêcher la broche de verrouillage (65) de se déplacer dans la position de déverrouillage.

4. Unité de levier de commande selon l'une quelconque des revendications 1 à 3, dans laquelle le levier de commande (50) comprend un corps creux (51) qui présente une paire de parois latérales opposées (51b, 51c) qui définissent un espace interne creux du corps creux (51), le bras oscillant (70) est reçu de façon pivotante dans l'espace interne creux du corps creux (51), le levier de verrouillage (60) est monté de façon pivotante sur une surface extérieure de l'une des parois latérales (51c) pour être actionné par un index de l'opérateur humain, et ladite paroi latérale (51) comporte un trou oblong (51d) à travers lequel la broche de verrouillage (65) est mobile en engagement de verrouillage mutuel avec la surface d'engagement de broche (77) du bras oscillant (70).
